(19) Europäisches Patentamt
European Patent Office
Office européen des brevets

(11) **EP 4 210 950 B1**

(12) **EUROPEAN PATENT SPECIFICATION**

(45) Date of publication and mention
of the grant of the patent:
**02.10.2024 Bulletin 2024/40**

(21) Application number: **21769390.2**

(22) Date of filing: **25.08.2021**

(51) International Patent Classification (IPC):
**B33Y 70/10** (2020.01)   **B29C 64/153** (2017.01)
**B33Y 40/20** (2020.01)

(52) Cooperative Patent Classification (CPC):
**B33Y 70/10; B29C 64/153; B33Y 40/20;**
Y02P 10/25

(86) International application number:
**PCT/EP2021/073485**

(87) International publication number:
**WO 2022/053315 (17.03.2022 Gazette 2022/11)**

(54) **SELECTIVE LASER SINTERING OF POLYMERIC POWDERS EMBEDDED WITH WATER-SOLUBLE FLOW ADDITIVES**

SELEKTIVES LASERSINTERN VON MIT WASSERLÖSLICHEN FLIESSADDITIVEN EINGEBETTETEN POLYMERPULVERN

FRITTAGE LASER SÉLECTIF DE POUDRES POLYMÈRES INCORPORÉES D'ADDITIFS D'ÉCOULEMENT SOLUBLES DANS L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2020 US 202063075544 P**

(43) Date of publication of application:
**19.07.2023 Bulletin 2023/29**

(73) Proprietor: **Evonik Operations GmbH**
**45128 Essen (DE)**

(72) Inventors:
• **ACREMAN, Kevin**
**Cambridge, Massachusetts 02138 (US)**
• **DADSETAN, Mahrokh**
**Birmingham, Alabama 35211 (US)**
• **HANSON, William**
**Petaluma, California 94954 (US)**
• **JONES, Marshall Scott**
**Bessemer, Alabama 35022 (US)**

(74) Representative: **Evonik Patent Association**
**c/o Evonik Industries AG**
**IP Management**
**Bau 1042A/PB 15**
**Paul-Baumann-Straße 1**
**45772 Marl (DE)**

(56) References cited:
JP-A- 2007 301 945      JP-A- 2007 301 945
KR-A- 20120 045 480      KR-A- 20120 045 480
KR-B1- 100 537 404      KR-B1- 100 537 404
US-A- 5 817 206      US-A- 5 817 206

**Description**

**Technical Field of Invention**

This invention relates to a polymeric powder preferably a medical grade polymeric powder, for use in Selective Laser Sintering (SLS) for application fields including but not limited to medical, food, and pharmaceutical. The, preferably medical grade, polymer is biodegradable and can be used to manufacture objects such as medical implants and tissue scaffolds. The powder is biocompatible and biodegradable and can include a flow additive. The flow additive can consist of an osteoconductive flow aid suited for medical applications, a water-soluble salt flow aid that does dissolve during device degradation, or a combination of both. The water-soluble salt flow aid is used for applications where no leftover signs of implantation are observed within tissue after device degradation.

**Background of Invention**

Selective Laser Sintering (SLS) processing has been extensively used for metal and polymer. More specifically, polymer selective laser sintering primarily utilizes engineering polymers such as nylon, polyaryletherketones, polyetheretherketones, polystyrenes, and thermoplastic elastomers. These polymer grades are often not intended for medical use; furthermore, the engineering polymers on the current market do not degrade within the body. Additionally, the flow additives typically used for selective laser sintering polymer powders are not suited for implantation in a degradable polymer matrix. Flow additives typically used on the market are, but are not limited to, glass microspheres, carbon powder, fumed silica, carbon nanotubes, and colorants.

While current SLS polymer materials are not suitable to perform as a biodegradable implant, there are multiple materials on the current market that can be utilized for this purpose. These materials include, but are not limited to, polycaprolactone, polylactide, poly lactic-co-glycolic acid, and various copolymers thereof. These materials are ideal for different medical applications depending on the mechanical, chemical, and degradation time requirements. For example, polydioxanone can degrade at a much faster rate than polylactide; however, polylactide is significantly stronger than polydioxanone. Due to these characteristics, polylactide may be used for orthopedic applications while polydioxanone may be used for blood contact applications such as artery plugs.

Biodegradable polymers are of interest with SLS 3D printing as SLS printing is a relatively fast production method, can print a large volume of parts within a single print, does not require support materials, and produces 3D printed articles with high accuracy. This process can be utilized for large and small applications within the body. While SLS 3D printing can be used for a wide variety of applications, one manufacturing condition will not work for all materials. For example, the conditions typically used for the printing of nylon cannot be used for the printing of polycaprolactone. As a result, a specialized printing method will have to be developed. Biodegradable medical polymers printed using SLS would provide a biocompatible, biodegradable, and accurate method of manufacture of implantable medical devices.

To develop a biodegradable polymer SLS powder, the powder needs to be optimized by altering variables such as particle morphology and the potential addition of flow additive. The WO 2019/043137 A1 filing indicates the use of unsintered, amorphous hydroxyapatite for the improvement of powder flow at weight concentrations up to 10 weight percent. The use of a water-soluble salt is beneficial as it will be removed by the body during implant degradation. As a result, no remaining solids will be present at the site of implantation after complete polymeric implant degradation. Similarly to WO 2019/043137 A1, the water-soluble flow additive will benefit the powder flowability to enable printing using SLS technology.

The document JP 2007 301945 A discloses a polymeric powder containing a water-soluble salt; the aim is to obtain porous structures.

**Summary of Invention**

The invention is defined by the independent claims 1 and 10. In one aspect, disclosed are manufacturing methods utilized to produce polymer-based materials and polymer-based composite materials to be utilized in the production of blood contact medical implants that degrade, do not require removal, and does not leave residual material behind. The manufacturing methods utilized to produce polymer-based materials or polymer-based composite materials consist of but are not limited to impact milling, pin milling, shear milling, centrifugal milling, knife milling, cryo-milling, mix milling, impact milling, or air classifier milling. Additionally, blending methods such as tumble blending, inversion blending, cryo-milling, mix milling, impact milling, and especially high shear blending are utilized to produce polymer-based powder composite materials. The material mentioned can be presented in a blended powder form, sintered form, extruded form, or injection molded form. The polymer powder used for these compositions is a medical grade bioresorbable powder. Medical grade powder according to the invention includes polydioxanone. As a result, the material can be utilized to produce an implantable medical device; furthermore, due to the material degrading, the need for a removal surgery is not necessary.

In another aspect, the additives used for the polymer powder composites are water soluble salts. The water-soluble salts are embedded into the surface of the polymer particle by methods including, but not limited to, tumble blending, inversion blending, cryo-milling, mix milling, impact milling, and especially high shear blending. The water-soluble salt may also be embedded into the polymer particle during production. The water-soluble salts include, but are not limited to, non-toxic salts such as magnesium sulfate, sodium sulfate, potassium chloride, sodium chloride, sodium sulfate, aluminum potassium sulfate, magnesium chloride, and magnesium chloride hexahydrate. After implantation, as the polymer material degrades, the salts dissolve into the blood stream and are removed through the kidneys in urine. The water-soluble salts do not stay within the implantation site similar to other flow additive such as ceramics; however, the water-soluble salt embedded polymer powder can be combined with other additives for a specialized material. More specifically, additives such as bioceramics can be added to the water-soluble salt embedded polymer powder to create a powder specialized for the use in orthopedics.

In another aspect, the water- soluble salts benefit the flow of polymer powders for SLS printing after being blended with or embedded into the surface of the polymer powder particles. The water-soluble salt is believed to benefit the flow of the polymer powder by reducing hydrogen bonding between particles, reducing static among material, generating surface alterations on the particle to promote tumbling, and by helping decrease the level of water adsorption. Polymer powders are highly complex materials that can change with a slight shift in particle size, temperature, or humidity. The use of a flow aid or general additive enables a larger processing window.

In one aspect, disclosed are compositions of polymer-based material powders with proper flow properties to allow for greater manufacturing simplicity and efficiency. The polymer powder composites were blended with additives at different concentrations and then flow was analyzed using dynamic flow analysis. The dynamic flow analysis method used focused on the results of avalanche energy, break energy, and surface fractal. The lowest values of these variables indicated the proper flow mechanics for the powder composition. Material composites intended for powder processing applications, more preferably laser sintering applications, were optimal if they had a surface fractal result closest to one compared to the other additive blends. Flow behavior of the materials can also be evaluated using tap density and a qualitative blade test. The qualitative blade test is performed for powder compositions intended for laser sintering or binder jetting applications as the material will be utilized in this machinery. After composite powder flow is optimized, minimal mechanical force is required to place the material in an unconsolidated state.

In another aspect, disclosed are compositions of polymer-based material powders that can be utilized with selective laser sintering, binder jetting, selective absorbing sintering, and hybrid methods of the same. The processing methods mentioned require a powder with good flow regardless of ambient temperatures. This ensures that a polymer powder generates a smooth surface for the powder processing technology to fuse and generate a 3D article. If the powder has poor flow, the powder surface could be more porous and irregular resulting in bad printed parts. Printed parts produced with powder that has poor flow can have unpredictive mechanical characteristics and high failure rates. Typical printing process includes the dispersing of a powder layer on a platform, irradiating a section of material that corresponds to a cross sectional geometry of the part, then adding and irradiating additional layers until the part is completed.

In another aspect, disclosed are compositions of polymer-based material powders that can be utilized to produce structures with different inner and outer geometries or uniform geometries. The polymer powder developed can be utilized within laser sintering applications that allow for the 3D printing of complex geometries typically unachievable through common manufacturing methods. These geometries can be designed for a specific loading or for a specific tissue such as a trabecular structure for bone. The geometry of a part varies depending on its function.

In one aspect, disclosed is a printed method for biodegradable polymer materials within laser sintering technologies. Particularly, the printing method for polymer powder composites disclosed includes the printing of a base anchoring layer. The base anchoring layer is irradiated using a lower energy density than the printed part. Energy density is a measurement of the energy imparted by the laser onto the material powder bed during printing operation. The value can be reported as $J/mm^3$ and is calculated by dividing the laser wattage value by the product of scanning speed, hatch distance, and layer height. Additionally, the base anchoring layer can be greater than 100 micrometers in thickness, particularly between 50 micrometers to 1 mm, more specifically 50 to 500 micrometers, and especially 50 to 300 micrometers. Base anchoring layers are printed to generate a surface that is anchored in the powder bed. After the printing of base anchoring layers, the machine begins to print the part desired; nevertheless, the initial layers of the part could be printed within the base anchoring layer for additional prevention against curling, shifting, or geometry inaccuracies. The part is typically printed at a higher energy density and the base anchoring layer prevents the shifting, warping, curling, and shrinking of the part being printed. More specifically, the base anchoring layers allow for fine details to be printed without shifting, warping, curling, and shrinking. Without the printed base layer, most small detailed prints will fail. After the printing operation is completed, the printed base layer can be removed from the printed part; furthermore, the printed base anchoring layer can be partially separated into a powder that can be used for future printing operations. The printed base anchoring layer can be printed within multiple locations on the same part. For example, if a part has thin overhanging sections, an additional base anchoring layer will be printed in the powder bed before this section of the part is irradiated in-process.

In another aspect, the base anchoring layer geometry will fluctuate depending on the part that is being printed. The base anchoring layer may need to be thinner, thicker, wider, or narrower depending on the geometry of the printed part.

In one aspect, after the printing of potential parts, disclosed is an in-process annealing step that an operator can optimize to define final part crystallinity and mechanical function. This aspect includes annealing a polymer composite blend containing polydioxanone, a potential additional polymer with a melting point of 50°C to 240°C, and flow additives. The annealing method utilizes a processing temperature that is 10°C to 35°C below the lowest polymer melting point; furthermore, this temperature is maintained for a minimum of one second and a maximum of eight hours before starting a controlled cooling rate. The cooling rate is controlled at a rate of 0°C/min to 20°C/min. The annealing step is performed after the print job has completed. Additionally, printing time can be included in the annealing time. Printed parts annealed for a longer time with a slower cooling rate tend to have a higher tensile strength at yield, higher modulus, and a reduced elongation at break. Printed parts annealed for less time with a faster cooling rate have a lower tensile strength at yield, lower modulus, and larger elongation at break. Additionally, materials annealed for longer amounts of time have a higher crystallinity. Operators can utilize this information to produce products with different mechanical characteristics and crystallinity depending on the application. For example, soft tissue applications may not require a stronger part, but may require a part with higher elongation; furthermore, hard tissue applications may require a stronger part with a higher modulus and not a part with high elongation.

In one aspect, the laser parameters utilized during a laser sintering application can alter the end mechanics and crystallinity of a printed part. Energy density (J/mm$^3$) is calculated by dividing laser power (W) by the product of multiplying scanning speed (mm/s), hatch distance (mm), and layer height (mm). Parts printed at increasing energy densities tend to become stronger until a mechanical characteristic baseline is reached. Once a mechanical characteristic baseline is reached, the tensile strength at yield, modulus, and elongation at break become consistent. Higher energy densities tend to produce stronger parts than parts produced using lower energy densities. Additionally, higher energy densities increase the crystallinity of the final part while lower energy densities produce parts with lower crystallinity; however, annealing can produce similar crystallinities regardless of the energy density used to print the part. As a result, sections of a part that require higher strength can be printed at higher energy densities while sections of a part that do not require high strength can be printed at a lower energy density.

## Detailed Description of Invention

### 1. Definitions

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent to those described herein can be used in practice or testing of the present invention. The materials, methods, and examples disclosed herein are illustrative only and not intended to be limiting.

The terms "comprise(s)," "include(s)," "having," "has," "can," "contain(s)," and variants thereof, as used herein, are intended to be open-ended transitional phrases, terms, or words that do not preclude the possibility of additional acts or structures. The singular forms "a," "and," and "the" include plural references unless the context clearly dictates otherwise. The present disclosure also contemplates other embodiments "comprising," "consisting of," and "consisting essentially of," the embodiments or elements presented herein, whether explicitly set forth or not.

The conjunctive term "or" includes any and all combinations of one or more listed elements associated by the conjunctive term. For example, the phrase "an apparatus comprising A or B" may refer to an apparatus including A where B is not present, an apparatus including B where A is not present, or an apparatus where both A and B are present. The phrases "at least on of A, B, ... and N" or "at least one of A, B, ... N, or combinations thereof' are defined in the broadest sense to mean one or more elements selected from the group comprising A, B, ... and N, that is to say, any combination of one or more of the elements A, B, ... or N including any one element alone or in combination with one or more of the other elements which may also include, in combination, additional elements not listed.

The modifier "about" used in connection with a quantity is inclusive of the stated value and has the meaning dictated by the context (for example, it includes at least the degree of error associated with the measurement of the particular quantity). The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number. For example, "about 10%" may indicate a range of 9% to 11% and "about 1" may mean from 0.9 to 1.1. Other meanings of "about" may be apparent from the context, such as rounding off, so, for example "about 1" may also mean from 0.5 to 1.4.

For the recitation of numeric ranges herein, each intervening number there between with the same degree of precision is explicitly contemplated. For example, for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated.

The term "wt. %" is used herein to abbreviate weight percent. This refers the weight percentage of a material within a blend. "wt %" is not to be confused with an indication of blend homogeneity.

The terms "microencapsulated" and "encapsulated" are used herein to refer generally to a bioactive agent that is incorporated into any sort of long-acting formulation or technology regardless of shape or design; therefore, a "microencapsulated" or "encapsulated" bioactive agent may include bioactive agents that are incorporated into a particle or a microparticle and the like or it may include a bioactive agent that is incorporated into a solid implant and so on.

The term "bioactive agent" is used herein to include a compound of interest contained in or on a pharmaceutical formulation or dosage form that is used for pharmaceutical or medicinal purposes to provide some form of therapeutic effect or elicit some type of biologic response or activity. "Bioactive agent" includes a single such agent and is also intended to include a plurality of bioactive agents including, for example, combinations of two or more bioactive agents.

The term "biocompatible" as used herein refers to a material that is generally non-toxic to the recipient and does not possess any significant untoward effects to the subject and, further, that any metabolites or degradation products of the material are non-toxic to the subject. Typically, a substance that is "biocompatible" causes no clinically relevant tissue irritation, injury, toxic reaction, or immunological reaction to living tissue.

The term "biodegradable" as used herein refers to a material that will erode to soluble species or that will degrade under physiologic conditions to smaller units or chemical species that are, themselves, non-toxic (biocompatible) to the subject and capable of being metabolized, eliminated, or excreted by the subject.

The term "water-soluble" as used herein refers to a material that is soluble within water, in particular found within the body tissues, bloodstream, etc.. The term may also refer to a material that dissociates into ions after exposure to an aqueous environment. Preferably the term "water-soluble" according to the present invention refers to salts which have a solubility of 5 mg/ml up to 1500 mg/ml, more preferably 50 mg/ml up to 1150 mg/ml or 70 to 1000 mg/ml at 25°C in water. The person skilled in the art knows how to determine the solubility, for example by electrical conductivity measurements. As reference values for the measurement following values, in water, can be used $MgSO_4$ with a solubility of 351 mg/ml, magnesium sulfate heptahydrate with a solubility of 1130 mg/ml, sodium chloride with a solubility of 357 mg/ml, potassium chloride with a solubility of 340 mg/ml, anhydrous sodium sulfate with a solubility of 140 mg/ml, sodium sulfate heptahydrate with a solubility of 440 mg/ml, monopotassium phosphate with a solubility of 226 mg/ml, disodium phosphate heptahydrate with a solubility of 118 mg/ml, and disodium phosphate with a solubility of 77 mg/ml.

The term "non-agglomerating" as used herein refers to the powder when it does not generate large clumps of material that are created by the presence of moisture or packing of the powder.

The term "embedded" or "embed" as used herein refers to the fixation onto or into a surface. An "embedded" article refers to an article that is fixed to or embedded into a surface through methods of chemical, thermal, or physical integration methods.

The term "flow aid" refers to an additive, that when added to polymer-based powder materials, reduces occurrences of agglomeration and amount of energy required to cause the powder to avalanche or move.

The term "improved flowability" as used herein refers to the fluidization of powder particulates through movement generated by various stimuli to include impact forces from falling, dynamic powder flow analysis, and especially spreading by blade, roller, or feeding mechanism during processing. An improved flowability is reference to a decrease in break energy or avalanche energy after a base powder is treated with the flow aid.

The term "unconsolidated" and "unconsolidated state" as used herein refers to the physical state of a powder when it is fluidized and not compacted. In this state, the powder freely flows with minimal physical stimulus.

The term "powder processing technologies" as used herein refers to but are not limited to, technologies such as SLS 3D printing, powder fluidization, powder compounding, powder feeding, etc.

The term "avalanche energy" as used herein refers to the power change of a powder during an avalanche.

The term "break energy" as used herein refers to the energy at which the powder avalanches.

The term "interparticle friction" as used herein refers to the friction force present between two contacting polymer particle surfaces. The additive reduces the surface area in contact, which will reduce the amount of friction between particles and will result in a more fluidized or more flowable powder.

The term "hausner ratio" as used herein refers to the ratio between the bulk density and the tap density of the powder.

The term "compressibility index" as used herein refers to the percentage representation of how much the powder compresses during the tap density measurement.

Additional polymer powders could be any biocompatible polymers. Biocompatible polymers include but are not limited to polyarylketones, polymethacrylates, polycarbonates, polyacetals, polyethylenes, polypropylenes, polylactides, polycaprolactones, polyesteramide polyurethane, polytrimethyl carbonates, polyglycolide, poly(amino acid) and copolymers of the respective monomers like poly(lactide-co-glycolide), poly(lactide-co-caprolactone), poly(lactide-co-trimethly carbonate), poly(lactide-co-polyethylene-glycol), poly(orthoester), a poly(phosphazene), a poly(hydroxybutyrate) a copolymer containing a poly(hydroxybutarate), a poly(lactide-cocaprolactone), a polyanhydride, a poly(dioxanone), a poly(alkylene alkylate), a copolymer of polyethylene glycol and a polyorthoester, a biodegradable polyurethane, a polyamide, a polyetherester, a polyacetal, a polycyanoacrylate, a poly(oxyethylene)/poly(oxypropylene) copolymer, polyketals, polyphosphoesters, polyhydroxyvalerates or a copolymer containing a polyhydroxyvalerate, polyalkylene oxalates, polyalkylene succinates, poly(maleic acid), and copolymers, terpolymers, combinations thereof.

Polymer powders can come in many particle forms as a result of their production method. These forms include but are not limited to, porous, hollow, solid, spherical, or irregular.

Lactide-based polymers can comprise any lactide residue, including all racemic and stereospecific forms of lactide, including, but not limited to, L-lactide, D-lactide, and D,L-lactide, or a mixture thereof. Useful polymers comprising lactide include, but are not limited to poly(L-lactide), poly(Dlactide), and poly(DL-lactide); and poly(lactide-co-glycolide), including poly(L-lactide-co-glycolide), poly(D-lactide-co-glycolide), and poly(DL-lactide-co-glycolide); or copolymers, terpolymers, combinations, or blends thereof. Lactide/glycolide polymers can be conveniently made by melt polymerization through ring opening of lactide and glycolide monomers. Additionally, racemic DLlactide, L-lactide, and D-lactide polymers are commercially available. The L-polymers are more crystalline and resorb slower than DL polymers. In addition to copolymers comprising glycolide and DL-lactide or L-lactide, copolymers of L-lactide and DL-lactide are commercially available. Homopolymers of lactide or glycolide are also commercially available.

In a particular aspect, when the biodegradable polymer is poly(lactide-co-glycolide) or any other copolymers (mentioned above), or a mixture of poly(lactide) and poly(glycolide), the amount of lactide and glycolide in the polymer can vary. In a further aspect, the biodegradable polymer contains 0 to 100 mole %, 40 to 100 mole %, 50 to 100 mole %, 60 to 100 mole %, 70 to 100 mole %, or 80 to 100 mole % lactide and from 0 to 100 mole %, 0 to 60 mole %, 10 to 40 mole %, 20 to 40 mole %, or 30 to 40 mole % glycolide, Wherein the amount of lactide and glycolide is 100 mole %. In a further aspect, the biodegradable polymer can be poly(lactide), 95:5 poly(lactide-co-glycolide) 85:15 poly(lactide-co glycolide), 75:25 poly(lactide-co-glycolide), 65:35 poly(lac tide-coglycolide), or 50:50 poly(lactide-co-glycolide), Where the ratios are mole ratios.

In another aspect, the polymer can be a poly(caprolactone) or a poly(lactide-co-caprolactone). In one aspect, the polymer can be a poly(lactide-caprolactone), Which, in various aspects, can be 95:5 poly(lactide-co-caprolactone), 85:15 poly(lactide-co-caprolactone), 75:25 poly(lactide-cocaprolactone),65:35 poly(lactide-co-caprolactone), or 50:50 poly (lactide-co-caprolactone), where the ratios are mole ratios.

Flow aids and bioceramics include but are not limited to calcium phosphate and its doped variants (e.g. strontium, zinc, magnesium, fluoride, carbonate), calcium sulfate, calcium carbonate, bioactive glasses such as bioglass etc. Calcium phosphate include but are not limited to hydroxyapatite, tricalcium phosphate, calcium deficient carbonate-containing hydroxyapatite, octacalcium phosphate, dicalcium phosphate, biphasic calcium phosphate or a mixture thereof.

The term "water-soluble salt" used herein refers to the use of a salt that dissociates into its comprising ions; furthermore, the salt is also used as a flow additive for SLS Powder development. Some salts that the term "water-soluble salt" refers to are magnesium sulfate, sodium sulfate, potassium chloride, sodium chloride, sodium sulfate, aluminum potassium sulfate, magnesium chloride, and magnesium chloride hexahydrate

The term "osteoconductive additive" refers to a material which may be added to compositions to increase the biological response and bone tissue growth promotion of the resultant compositions disclosed; furthermore, the osteoconductive additive can act as both a promoter of biological response and as a flow aid defined above.

The term "composite" refers to the use of a flow aid, bioceramic, biomolecule, and/or bioactive agent that is mixed or processed with the polymer-based material.

The term "polymer-based material" refers to a material where the largest component is a polymer.

The term "irradiate" refers to the act of introducing energy to a polymer material through means of various heat sources used during laser sintering applications. This includes $CO_2$ lasers, blue light diodes, argon lasers, etc.

In one aspect, cryogenically ground polymer powders are being used as base powder. In order to improve their flow behavior flow aids had to be added, such as bioceramics. Interestingly, particularly effective flow aids seem to have in common a low-crystalline (unsintered) form of bioceramics. This feature enables a rather homogeneous mixing behavior and good flow properties. The mixing with the polymer powder can be done on a tumbler mixer or a high shear mixer. These mixers are commercially available from Somakon and other companies.

Such flow aids are typically in the range of 0.1 micrometers to 1 mm, 0.1 micrometers to 500 micrometers, 0.1 to 250 micrometers, 0.1 to 100 micrometers, or 0.1 to 50 micrometers, 0.1 to 40 micrometers, 0.1 to 30 micrometers, 0.1 to 20 micrometers, 0.1 to 10 micrometers, 0.1 to 5 micrometers, or 0.1 to 1 micrometer. The polymer composite blend has a typical flow aid concentration of between 0.1 to 50 wt%, 0.1 to 40 wt%, 0.1 to 30 wt%, 0.1 to 20 wt%, 0.1 to 10 wt%, 0.1 to 5 wt%, 1 to 50 wt%, or 2 to 50 wt% flow aids. Also, mixtures of different flow aids can be used, but an individual flow aid within a mixture of flow aids will not exceed the total flow aid weight percentage indication.

Such flow aids can be used for multiple powder particle shapes. Such shapes are irregular shaped polymer powder and spherical shaped polymer powder.

A wide variety of bioactive agents can be used with the methods described herein. In one aspect, the bioactive agent can be a releasable bioactive agent, i.e., a bioactive agent that can be released from the controlled release system into adjacent tissues or fluids of a subject. In certain aspects, the bioactive agent can be in or on the controlled release system.

Various forms of the bioactive agent can be used, which are capable of being released from the controlled release system into adjacent tissues or fluids. To that end, a liquid or solid bioactive agent can be incorporated into the controlled release system described herein. The bioactive agents are at least very slightly water soluble, and preferably moderately water soluble. The bioactive agents can include salts of the active ingredient. As such, the bioactive agents can be acidic, basic, or amphoteric salts. They can be nonionic molecules, polar molecules, or molecular complexes capable of hydrogen bonding. The bioactive agent can be included in the compositions in the form of, for example, an uncharged molecule, a molecular complex, a salt, an ether, an ester, an amide, polymer drug conjugate, or other form to provide the effective biological or physiological activity.

Examples of bioactive agents that incorporated into systems herein include, but are not limited to, peptides, proteins such as hormones, enzymes, antibodies and the like, nucleic acids such as aptamers, iRNA, DNA, RNA, antisense nucleic acid or the like, antisense nucleic acid analogs or the like, low-molecular weight compounds, or high-molecular-weight compounds. Bioactive agents contemplated for use in the disclosed implantable composites include anabolic agents, antacids, anti-asthmatic agents, anti-cholesterolemic and anti-lipid agents, anti-coagulants, anti-convulsants, anti-diarrheals, anti-emetics, anti-infective agents including antibacterial and antimicrobial agents, anti-inflammatory agents, anti-manic agents, antimetabolite agents, antinauseants, anti-neoplastic agents, anti-obesity agents, anti-pyretic and analgesic agents, antispasmodic agents, antithrombotic agents, anti-tussive agents, anti-uricemic agents, anti-anginal agents, antihistamines (e.g., terfenadine), appetite suppressants, biologicals, cerebral dilators, coronary dilators, bronchiodilators, cytotoxic agents, decongestants, diuretics, diagnostic agents, erythropoietic agents, expectorants, gastrointestinal sedatives, hyperglycemic agents, hypnotics, hypoglycemic agents, immunomodulating agents, ion exchange resins, laxatives, mineral supplements, mucolytic agents, neuromuscular drugs, peripheral vasodilators, psychotropics, sedatives, stimulants, thyroid and anti-thyroid agents, tissue growth agents, uterine relaxants, vitamins, or antigenic materials.

Other bioactive agents include androgen inhibitors, polysaccharides, growth factors (e.g., a vascular endothelial growth factor-VEGF), hormones, anti-angiogenesis factors, dextromethorphan, dextromethorphan hydrobromide, noscapine, carbetapentane citrate, chlophedianol hydrochloride, chlorpheniramine maleate, phenindamine tartrate, pyrilamine maleate, doxylamine succinate, phenyltoloxamine citrate, phenylephrine hydrochloride, phenylpropanolamine hydrochloride, pseudoephedrine hydrochloride, ephedrine, codeine phosphate, codeine sulfate morphine, mineral supplements, cholestryramine, N-acetylprocainamide, acetaminophen, aspirin, ibuprofen, phenyl propanolamine hydrochloride, caffeine, guaifenesin, aluminum hydroxide, magnesium hydroxide, peptides, polypeptides, proteins, amino acids, interferons, cytokines, and vaccines.

Representative drugs that can be used as bioactive agents include, but are not limited to, peptide drugs, protein drugs, desensitizing materials, antigens, anti-infective agents such as antibiotics, antimicrobial agents, antiviral, antibacterial, antiparasitic, antifungal substances and combination thereof, antiallergenics, androgenic steroids, decongestants, hypnotics, steroidal anti-inflammatory agents, anti-cholinergics, sympathomimetics, sedatives, miotics, psychic energizers, tranquilizers, vaccines, estrogens, progestational agents, humoral agents, prostaglandins, analgesics, antispasmodics, antimalarials, antihistamines, cardioactive agents, nonsteroidal anti-inflammatory agents, antiparkinsonian agents, antihypertensive agents, β-adrenergic blocking agents, nutritional agents, and the benzophenanthridine alkaloids. The agent can further be a substance capable of acting as a stimulant, sedative, hypnotic, analgesic, anticonvulsant, and the like.

Other bioactive agents include but are not limited to analgesics such as acetaminophen, acetylsalicylic acid, and the like; anesthetics such as lidocaine, xylocalne, and the like; anorexics such as dexadrine, phendimetrazine tartrate, and the like; antiarthritics such as methylprednisolone, ibuprofen, and the like; antiasthmatics such as terbutaline sulfate, theophylline, ephedrine, and the like; antibiotics such as sulfisoxazole, penicillin G, ampicillin, cephalosporins, amikacin, gentamicin, tetracyclines, chloramphenicol, erythromycin, clindamycin, isoniazid, rifampin, and the like; antifungals such as amphotericin B, nystatin, ketoconazole, and the like; antivirals such as acyclovir, amantadine, and the like; anticancer agents such as cyclophosphamide, methotrexate, etretinate, and the like; anticoagulants such as heparin, warfarin, and the like; anticonvulsants such as phenyloin sodium, diazepam, and the like; antidepressants such as isocarboxazid, amoxapine, and the like; antihistamines such as diphenhydramine HCl, chlorpheniramine maleate, and the like; hormones such as insulin, progestins, 17-alpha-hydroxy-porgesterone caproate, iso-allo-pregnanolonetestosterone, prenisolone, prednisone, dexamethasone estrogens (e.g., estradiol), corticoids, glucocorticoids, androgens, and the like; tranquilizers such as Thorazine, diazepam, chlorpromazine HCl, reserpine, chlordiazepoxide HCl, and the like; antispasmodics such as belladonna alkaloids, dicyclomine hydrochloride, and the like; vitamins and minerals such as essential amino acids, calcium, iron, potassium, zinc, vitamin B12, and the like; cardiovascular agents such as prazosin HCl, nitroglycerin, propranolol HCl, hydralazine HCl, pancrelipase, succinic acid dehydrogenase, and the like; peptides and proteins such as LHRH, somatostatin, calcitonin, growth hormone, glucagon-like peptides, growth releasing factor, angiotensin, FSH, EGF, bone morphogenic protein (BMP), erythopoeitin (EPO), interferon, interleukin, collagen, fibrinogen, insulin, Factor VIII, Factor IX, ENBREL®, RITUXAM®, HERCEPTIN®, alpha-glucosidase, Cerazyme/CEREDOSE®, vasopressin, ACTH, human serum albumin, gamma globulin, structural proteins, blood product proteins, complex proteins, enzymes, antibodies, monoclonal antibodies, and the like; prostaglandins; nucleic acids; carbohydrates; fats; narcotics such as morphine, codeine, and the like, psychotherapeutics; anti-malarials, L-dopa, diuretics such as furosemide, spironolactone, and the like; antiulcer drugs such as rantidine HCl, cimetidine HCl, and the like, and calcium channel antagonist such as nimodipine and the like, lumefantrine, cilengitide, 3-hydroxy-3-methylglutaryl-coenzyme A reductase inhibitors such as lovastatin and the like.

Biomolecules include but are not limited to fibrin, fibrinogen, cellulose, starch, collage, and hyaluronic acid.

The characterization of the different powders was done on a standard test machine such as a laser scattering machine for particle size determination (commercially available from the company Beckmann Coulter or Malvern). The DSC tests were performed with a heating rate of 10°C/min and a cooling rate of 20°C/min using a TA instruments machine. SEM was performed on a desktop machine (commercially available from the company Hitachi). BET measurements were done on a Micromeritics instrument.

Selective laser sintering (SLS) was performed on a blade based (e.g. EOS P series) machine. The technique produces physical parts through a selective solidification of a variety of fine powders. SLS builds up parts layer by layer using powders which are selectively bonded when a laser beam scans the powder across each layer's cross-sectional area. Typical laser energy densities are anywhere from 7 kJ/m$^2$ to 60 kJ/m$^2$ SLS fuses thin layers of powder (typically ~0.1mm thick) which have been spread across the build area using a blade. The part building takes place inside an enclosed chamber filled with an inert gas. Preferably nitrogen gas, to minimize oxidation and degradation of the powdered material. The powder in the build platform is maintained at an elevated temperature just below the melting point (for semi-crystalline polymer only) of the powdered material.

The quantitative methods used for characterizing powder flowability involved use of a flowability testing apparatus (Mercury Scientific Instruments) consisting of a rotating cylindrical drum with glass walls which characterizes movement of the powder particles with a camera. The apparatus measures the maximum height of the powder pile before occurrence of an avalanche. A powder requires more energy to flow if the powder height before avalanche is high. It is an indication of the minimum energy required to make the powder particles flow. If not otherwise mentioned the tests are being performed at ambient conditions (rt, humidity level around 40%).

The determination of the particle size was performed according to the United States Pharmacopeia 36 (USP) chapter <429> and European Pharmacopeia 7.0 (EP) chapter 2.9.31. The particle size distribution was determined utilizing a laser scattering instrument (e.g. Fa. Sympatec GmbH, type HELOS equipped with RODOS dry dispersing unit). The laser diffraction method is based on the phenomenon that particles scatter light in all directions with an intensity pattern that is dependent on particle size. A representative sample, dispersed at an adequate concentration in a suitable liquid or gas, is passed through the beam of a monochromic light source usually from a laser. The light scattered by the particles at various angles is measured by a multi-element detector, and numerical values relating to the scattering pattern are then recorded for subsequent analysis. The numerical scattering values are then transformed, using an appropriate optical model and mathematical procedure, to yield the proportion of total volume to a discrete number of size classes forming a volumetric particle size distribution (e.g. $d_{50}$ describes a particle diameter corresponding to 50% of cumulative undersize distribution).

## 2. Composition of Invention

Disclosed herein are compositions of a polymer material that is suitable for use in the production of medical devices and/or medical device surface treatments.

Further disclosed herein are compositions of polymer material that is suitable for use in the production of food contact devices or surfaces.

Further disclosed herein are compositions of polymer material that is suitable for use in powder processing technologies such as selective laser sintering, binder jetting, selective absorbing sintering, and hybrid methods of the same.

Further disclosed herein are compositions which comprise a polymer material as well as varying concentrations of flow aid to improve the material flow during processing.

Further disclosed herein are compositions which comprise a polymer material as well as varying concentrations of water-soluble salt to benefit the flow of the polymer particle and to induce or inhibit biological response due to porosity created by water-soluble salt leaching.

Further disclosed herein are compositions which comprise a polymer material as well as varying concentrations of water-soluble salts to benefit the flow of the polymer particle for various powder processing technologies.

Further disclosed herein are compositions which comprise a polymer material as well as varying concentrations of bioceramic to induce or inhibit a biological response and/or improve material flow during processing.

Further disclosed herein are compositions which comprise a polymer material as well as varying concentrations of biomolecules to induce or inhibit a biological response and/or improve material flow during processing.

Further disclosed herein are compositions which comprise a polymer material as well as varying concentrations of bioactive agent to induce or inhibit a biological response and/or improve material flow during processing.

Further disclosed herein are compositions which comprise a polymer material as well as varying concentrations of flow aid, bioceramic, biomolecule, osteoconductive additive, water-soluble salt, and/or bioactive agent to increase the bulk density of base powder formulations.

Further disclosed herein are compositions which comprise a polymer material as well as varying concentrations of water-soluble salts to increase the bulk density of base powder formulations.

Further disclosed herein are compositions which comprise a polymer material as well as varying concentrations of flow aid, bioceramic, biomolecule, osteoconductive additive, water-soluble salt, and/or bioactive agent that when processed using various powder processing technology, has a different part density depending on processing parameters.

Further disclosed herein are compositions which comprise a polymer material as well as varying concentrations of water-soluble salt that when processed using various powder processing technologies, has a different part density depending on processing parameters.

Further disclosed herein are compositions which comprise a polymer material as well as varying concentrations of water-soluble salt that, depending on the water-soluble salt selected and the weight percentage of salt, the salt is used to obtain specific mechanical properties of the produced article from the composite powder.

Further disclosed herein are compositions which comprise a polymer material that is mixed with varying concentrations of flow aid, water-soluble salt, bioceramic, biomolecule, osteoconductive additive, and/or bioactive agent and processed into an article.

Further disclosed herein are compositions which comprise a polymer material that is mixed with varying concentrations of water-soluble salts and processed into an article.

Further disclosed herein are compositions which comprise a polymer material composite blend used to produce an article with varying geometries on internal and external surfaces.

Further disclosed herein are compositions which comprise a polymer material composite blend used to produce an article that is biodegradable, biocompatible, and/or both.

Further disclosed herein are compositions which comprise a polymer material composite blend used to produce an article that, after manufacture, can have the composite additive removed.

Further disclosed herein are polymer-based composite materials where the polymer material accounts for 1% to about 100% by weight of the composition, such as 5% to about 100% by weight of the composition, such as 10% to about 100% by weight of the composition, such as 20% to about 100% by weight of the composition, such as 30% to about 100% by weight of the composition, such as 40% to about 100% by weight of the composition, such as 50% to about 100% by weight of the composition, such as about 60% to about 100% by weight of the composition, such as about 70% to about 100% by weight of the composition, such as 80% to about 100% by weight of the composition, such as 85% to about 100% by weight of the composition, such as 90% to about 100% by weight of the composition, such as 95% to about 100% by weight of the composition. Besides polydioxanone, the polymer material may be comprised of polyesters, including polycaprolactone, polylactide, poly lactic-co-glycolic acid, polyglycolic acid, polyvinyl acetate, polyvinyl alcohol, and blends thereof.

Further disclosed herein are polymer-based composite materials where, besides polydioxanone, the polymer material could be polyarylketones, polymethacrylates, polycarbonates, polyacetals, polyethylenes, polypropylenes, polylactides, polycaprolactones, polyesteramide, polyurethane, polytrimethyl carbonates, polyglycolide, poly(amio acid) and copolymers of the respective monomers like poly(lactide-co-glycolide), poly(lactide-co-caprolactone), poly(lactide-co-trimethly carbonate), poly(lactide-co-polyethylene-glycol), poly(orthoester), a poly(phosphazene), a poly(hydroxybutyrate) a copolymer containing a poly(hydroxybutarate), a poly(lactide-cocaprolactone), a polyanhydride, a poly(dioxanone), a poly(alkylene alkylate), a copolymer of polyethylene glycol and a polyorthoester, a biodegradable polyurethane, a polyamide, a polyetherester, a polyacetal, a polycyanoacrylate, a poly(oxyethylene)/poly(oxypropylene) copolymer, polyketals, polyphosphoesters, polyhydroxyvalerates or a copolymer containing a polyhydroxyvalerate, polyalkylene oxalates, polyalkylene succinates, poly(maleic acid), and copolymers, terpolymers, combinations thereof.

Further disclosed herein are polymer-based composite materials where a polydioxanone powder can be blended with another polymer material such as polyarylketones, polymethacrylates, polycarbonates, polyacetals, polyethylenes, polypropylenes, polylactides, polycaprolactones, polyesteramide, polyurethane, polytrimethyl carbonates, polyglycolide, poly(amio acid) and copolymers of the respective monomers like poly(lactide-co-glycolide), poly(lactide-co-caprolactone), poly(lactide-co-trimethly carbonate), poly(lactide-co-polyethylene-glycol), poly(orthoester), a poly(phosphazene), a poly(hydroxybutyrate) a copolymer containing a poly(hydroxybutarate), a poly(lactide-cocaprolactone), a polyanhydride, a poly(dioxanone), a poly(alkylene alkylate), a copolymer of polyethylene glycol and a polyorthoester, a biodegradable polyurethane, a polyamide, a polyetherester, a polyacetal, a polycyanoacrylate, a poly(oxyethylene)/poly(oxypropylene) copolymer, polyketals, polyphosphoesters, polyhydroxyvalerates or a copolymer containing a polyhydroxyvalerate, polyalkylene oxalates, polyalkylene succinates, poly(maleic acid), and copolymers, terpolymers, combinations thereof.

Further disclosed herein are polymer-based composite materials where the osteoconductive additive, flow aid, bioceramic, biomolecule, and/or bioactive agent accounts for 0% to about 99% by weight of the composition, such as 0% to about 97% by weight of the composition, such as 0% to about 95% by weight of the composition, such as 0% to about 95% by weight of the composition, such as 0% to about 90% by weight of the composition, such as 0% to about 80% by weight of the composition, such as 0% to about 70% by weight of the composition, such as 0% to about 60% by weight of the composition, such as 0% to about 50% by weight of the composition, such as 0% to about 40% by weight of the composition, such as 0% to about 30% by weight of the composition, such as 0% to about 20% by weight of the composition, such as 0% to about 10% by weight of the composition, such as 0% to about 5% by weight of the composition, such as 0.5% to about 99% by weight of the composition, such as 0.5% to about 97% by weight of the composition, such as 0.5% to about 95% by weight of the composition, such as 0.5% to about 95% by weight of the composition, such as 0.5% to about 90% by weight of the composition, such as 0.5% to about 80% by weight of the composition, such as 0.5% to about 70% by weight of the composition, such as 0.5% to about 60% by weight of the composition, such as 0.5% to about 50% by weight of the composition, such as 0.5% to about 40% by weight of the composition, such as 0.5% to about 30% by weight of the composition, such as 0.5% to about 20% by weight of the composition, such as 0.5% to about 10% by weight of the composition, and/or such as 0.5% to about 5% by weight of the composition.

Further disclosed herein are polymer-based composite materials where the osteoconductive additive, flow aid, bioceramic, biomolecule, and/or bioactive agent may comprise at least 99%, at least 95%, at least 90%, at least 80%, at least 70%, at least 60%, at least 50%, at least 40%, at least 30%, at least 20%, at least 10%, at least 5% by weight of the final composite material.

Further disclosed herein are polymer-based composite materials where the water-soluble salts may comprise at least 99%, at least 95%, at least 90%, at least 80%, at least 70%, at least 60%, at least 50%, at least 40%, at least 30%, at least 20%, at least 10%, at least 5% by weight of the final composite material.

Further disclosed herein are polymer-based composite materials where the osteoconductive additive, flow aid, bioceramic, biomolecule, and/or bioactive agent may have a diameter no greater than 250 micrometer(s), no greater than 200 micrometer(s), no greater than 150 micrometer(s), no greater than 100 micrometer(s), no greater than 75 micrometer(s), no greater than 55 micrometer(s), no greater than 50 micrometer(s), no greater than 25 micrometer(s), no greater than 15 micrometer(s), no greater than 10 micrometer(s), no greater than 5 micrometer(s), about 0.1 micrometer(s) to about 250 micrometer(s), about 0.1 micrometer(s) to about 200 micrometer(s), about 0.1 micrometer(s) to about 150 micrometer(s), about 0.1 micrometer(s) to about 100 micrometer(s), about 0.1 micrometer(s) to about 75 micrometer(s), about 0.1 micrometer(s) to about 55 micrometer(s), about 0.1 micrometer(s) to about 50 micrometer(s), about 0.1 micrometer(s) to about 25 micrometer(s), about 0.1 micrometer(s) to about 10 micrometer(s), and about 0.1 micrometer(s) to about 5 micrometer(s).

## 3. Manufacturing Methods of Invention

It is understood that below the disclosed methods of making the compositions are not exhaustive and the methods may be combined or modified to suit any of the above-mentioned compositions that have been disclosed.

Disclosed in this document are methods of making, preparing, and processing a polymer-based material as previously described. The polymer-based material polydioxanone, can be blended with varying concentrations of osteoconductive additive, flow aid, bioceramic, biomolecule, water-soluble salt, and/or bioactive agent through multiple methods before processing using multiple potential powder processing technologies.

In one aspect, the polymer-based material composite powder can be processed with selective laser sintering, binder jetting, selective absorbing sintering, and hybrid methods of the same.

In another aspect, the polymer-based material, osteoconductive additive, flow aid, bioceramic, biomolecule, water-soluble salt, and/or bioactive agent powder is generated through a milling process such as jet milling, impact milling, centrifugal milling, pin milling, knife milling, cryo-milling, mix milling, impact milling, air classifier milling, and hybrid methods of the same.

In another aspect, the polymer-based material is blended with osteoconductive additive, flow aid, bioceramic, biomolecule, water-soluble salt, and/or bioactive agent using but not limited to high shear mixing, inversion blending, solvent blending, and hybrid methods of the same.

In another aspect, the polymer-based material is blended with water-soluble salt using high shear mixing, inversion blending, solvent blending, and hybrid methods of the same.

In another aspect, the polymer-based material is blended with water-soluble salt using a combination of high shear mixing, inversion blending, solvent blending, jet milling, impact milling, centrifugal milling, pin milling, knife milling, cryo-milling, mix milling, impact milling, air classifier milling, and hybrid methods of the same.

In another aspect, the polymer-based material is blended with water-soluble salt using varying sizes of milling media and a broad range of temperatures within a mix milling manufacturing method. Where the milling media is a medical grade stainless steel material of various shapes varying in size from 1 mm to 100 mm, 1 mm to 90 mm, 1 mm to 80 mm, 1 mm to 70 mm, 1 mm to 60 mm, 1 mm to 50 mm, 1 mm to 40 mm, 1 mm to 30 mm, 1 mm to 20 mm, 1 mm to 10 mm, or 1 mm to 5 mm. Additionally, the temperature ranges for mix milling can range between the melting temperature of the polymer material to cryogenic conditions.

In another aspect, the polymer-based material is blended with a second high modulus polymer material such as polyglycolide and polyvinyl alcohol using varying sizes of milling media and a broad range of temperatures within a mix milling manufacturing method. Where the milling media is a medical grade stainless steel material of various shapes varying in size from 1 mm to 100 mm, 1 mm to 90 mm, 1 mm to 80 mm, 1 mm to 70 mm, 1 mm to 60 mm, 1 mm to 50 mm, 1 mm to 40 mm, 1 mm to 30 mm, 1 mm to 20 mm, 1 mm to 10 mm, or 1 mm to 5 mm. Additionally, the temperature ranges for mix milling can range between the melting temperature of the polymer material to cryogenic conditions.

In another aspect, the polymer-based material blended with an osteoconductive additive, flow aid, bioceramic, biomolecule, and/or bioactive agent can be used in melt processing technologies such as, but not limited to, single screw extrusion, twin screw extrusion, injection molding, compression molding, and electrospinning. The resulting blended and processed material forms a composite material.

In another aspect, the polymer-based material blended with a water-soluble salt can be used in melt processing technologies sch as single screw extrusion, twin screw extrusion, injection molding, compression molding, electrospinning, 3D printing, or hybrid combinations thereof.

In another aspect, the polymer-based composite material can be granulized, pelletized, or extruded into a stock shape for other applications.

In another aspect, the polymer-based material composite powder is prepared for processing through a drying method which may or may not utilize a temperature within about 10°C the polymer glass transition temperature, a temperature within about 20°C the polymer glass transition temperature, a temperature within about 30°C the polymer glass transition temperature, a temperature within about 40°C the polymer glass transition temperature, a temperature within about 50°C the polymer glass transition temperature, a temperature within about 60°C the polymer glass transition temperature, a temperature within about 10°C the polymer melting temperature, a temperature within about 20°C the polymer melting temperature, a temperature within about 30°C the polymer melting temperature, a temperature within about 40°C the polymer melting temperature, a temperature within about 50°C the polymer melting temperature, a temperature within about 60°C the polymer melting temperature.

In another aspect, the polymer-based material composite powder is prepared for processing through a drying method which may or may not utilize vacuum.

In another aspect, the polymer-based material composite powder is prepared for processing through a drying method which may or may not also act as an annealing step for the polymer material.

In another aspect, the polymer-based material composite powder is prepared for processing through a drying method which may or may not prepare the material for processing using powder processing technologies where the drying process increases the onset of melting of the polymer material.

In another aspect, the polymer-based material composite powder is processed using powder processing technologies such as selective laser sintering, binder jetting, selective absorbing sintering, and hybrid methods thereof where the printed article can cool at a slow rate within the machine to allow for annealing of the article.

In another aspect, the blending of water-soluble salts through traditional blending methods is not suitable as it does not adhere to the surface of the polymer particle or cause a benefit to the powder flow. When integrating water-soluble salts into a polymer powder, high shear blending and tumble blending do not cause an even distribution of salt additive on the surface of the polymer particle. Additionally, milling the salt to a submicron particle size before blending operations does not benefit the salt adhesion to the polymer particle surface. Instead, an un-milled salt and polymer particle can easily be embedded using a mix milling method under room temperature or cryogenic conditions. The mix milling method utilizes the impact of milling media to embed the salt additive into the surface of the polymer particle.

## 4. Examples

The following examples are put forth so as to provide those of ordinary skill in the art with a complete disclosure and description of how the compounds, compositions, articles, devices, and/or methods claimed herein are made and evaluated, and are intended to be purely exemplary of the invention and are not intended to limit the scope of what the inventors regards as their invention. Efforts have been made to ensure accuracy with respect to numbers (e.g., amounts, temperature, etc.), but some errors and deviations should be accounted for. Unless indicated otherwise, parts are parts by weight, temperature is in °C, or is at ambient temperature, and pressure is at or near atmospheric.

**Example 1**

**Milling**

The composite powder was generated by blending two milled powders. The polydioxanone polymer used for generation of the powder composites was milled after procurement of the raw material. The milling procedure for the polydioxanone required a cryogenic milling method. The polydioxanone granulate fed into the cryogenic milling process had a particle size of one to three millimeter and a bulk density of 0.62 kg/L. After milling, the polydioxanone powder material had a particle size where 90% of the powder is less than 100 micron and the powder bulk density was 0.41 kg/L. The milled polydioxanone polymer particle size, as measured using laser diffraction, can be seen in Table 1. All agglomerates were removed from the polydioxanone powder before blending with additive or using within a powder processing technology.

*Table 1 Particle size measurement by laser diffraction of milled polydioxanone powder.*

| D10 (micron) | D50 (micron) | D90 (micron) |
|---|---|---|
| 12 | 44 | 109 |

The production of polydioxanone powder through milling is much more efficient compared to emulsion or other solvent methods. Polydioxanone requires highly corrosive and toxic solvents for dissolution such as Hexafluoro-2-propanol (HFIP). After emulsion, the solvent would have to be removed to a safe level for implantation. As a result, while emulsion can produce particles within the proper size range for laser sintering applications, it is not recommended for polydioxanone.

Additional polymer powders were generated of polycaprolactone and polylactide according to WO 2019/043137 A1. Particle sizes less than 100 micrometers could be achieved. The particle sizes for polycaprolactone and polylactide milled polymers achieved using a similar method to the polydioxanone can be seen in Table 2.

*Table 2 Particle size measurement by laser diffraction of milled polycaprolactone and polylactide polymer powders.*

| | D10 (micron) | D50 (micron) | D90 (micron) |
|---|---|---|---|
| Polycaprolactone | 21 | 53 | 103 |
| Polylactide | 28 | 68 | 109 |

**Example 2**

**Flow with Additives**

Multiple compositions are made that include both a polydioxanone powder and an additive. The additive can vary depending on the application; furthermore, multiple additives can be blended together to have a multifunctional powder composite. The additives discussed in this example can be classified as an osteoconductive additive, a bioglass, and a bioceramic. The flow of each composition was evaluated using a dynamic flow analysis method with the Revolution Powder Analyzer from Mercury Scientific. 40 mL of each powder composition was used for testing at 90°C. This temperature was chosen as it is close to a potential printing temperature used during the laser sintering process. The three parameters useful in development of a flowable powder for powder manufacturing technologies are Avalanche Energy, Break Energy, and Surface Fractal defined above. The flow results from the baseline polydioxanone powder can be seen in Table 3.

*Table 3 Flow behavior of pure polydioxanone powder at 90°C.*

| Pure Milled PDO (X206S) | |
|---|---|
| Avalanche Energy (kJ/kg) | 35.03 |
| Break Energy (kJ/kg) | 95.81 |

(continued)

| Pure Milled PDO (X206S) | |
|---|---|
| Surface Fractal | 9.77 |

The dynamic flow analysis results for the pure polydioxanone indicate that the powder flow is not suited for SLS or similar laser sintering processes as the powder surface has a surface fractal of 9.77. Once additive was blended with the polydioxanone powder, the surface fractal quickly reduced. The desired polymer surface fractal is less than two, while the best surface fractal result is one. This result indicates that the powder generates a smooth surface after an avalanche or shift in material. A SLS process requiring a smooth powder surface would require a powder with a surface fractal as close to one as possible; nevertheless, this may not be needed for material transport technologies as how smooth the powder surface is will not affect processing. For powder processing technologies that require material flow suitable for consistent material dispensing, the powder composition with the lowest break energy and avalanche energy should be selected. The polydioxanone powder blends with additive can be seen in Table 4. For all additives, their particle size is referenced. The term 'submicron' indicates an additive with a particle size less than 2 micrometers. The term '10 micron' indicates an additive with a mean particle size of 10 micrometers.

*Table 4 Flow behavior of pure polydioxanone powder and submicron UHA ($D_{50}$ 700-900 nm) at 90°C.*

| Submicron UHA | 1wt% | 3wt% | 5wt% | 7wt% | 10wt% |
|---|---|---|---|---|---|
| Avalanche Energy (kJ/kg) | 29.4 | 17.13 | 16.11 | 16.46 | 20.75 |
| Break Energy (kJ/kg) | 100.83 | 88.64 | 95.92 | 100.99 | 110.05 |
| Surface Fractal | 2.16 | 1.79 | 2.08 | 2.28 | 2.9 |

The flow results for blends with different particle size submicron unsintered hydroxyapatite (Submicron UHA) indicate that the best flow result is 3wt% additive. This additive concentration has the lowest surface fractal, lowest break energy, and the third lowest avalanche energy. Qualitative blade testing was performed by placing the 3wt% and 5wt% submicron UHA and polydioxanone powder blends in a Selective Laser Sintering machine, allowing the blade to generate a smooth surface, dropping the platform by 100 microns, adding more composite powder blend, and then allowing the blade to dispense a 100 micron layer. If the powder surface was smooth with no agglomerates, it was deemed acceptable for 3D printing applications. The 5wt% submicron UHA and polydioxanone powder blend had the best blade test result and should be selected for Selective Laser Sintering printing parameter development. The unsintered hydroxyapatite was acquired from Himed.

*Table 5 Flow behavior of pure polydioxanone powder and $D_{50}$ 10 micron UHA at 90°C.*

| 10 micron UHA | 1wt% | 3wt% | 5wt% | 7wt% | 10wt% |
|---|---|---|---|---|---|
| Avalanche Energy (kJ/kg) | 28.14 | 21.01 | 22.4 | 25.14 | 32.57 |
| Break Energy (kJ/kg) | 94.99 | 98.31 | 101.65 | 112.36 | 116.96 |
| Surface Fractal | 2.04 | 1.8 | 2.45 | 2.68 | 3.47 |

Compared to the submicron unsintered hydroxyapatite, the 10 micron unsintered hydroxyapatite has a higher avalanche energy and break energy Table 5. This indicates that more energy is required to induce an unconsolidated state of powder inducive to flow. A qualitative blade test was performed on the 3wt% 10 micron UHA and polydioxanone powder blend and indicated it was suitable for Selective Laser Sintering. Selective laser sintering printing parameter development for this blend should begin at 3wt% 10 micron UHA.

*Table 6 Flow behavior of pure polydioxanone powder and unsintered FHA at 90°C.*

| Submicron Unsintered FHA | 1wt% | 3wt% | 5wt% | 7wt% | 10wt% |
|---|---|---|---|---|---|
| Avalanche Energy (kJ/kg) | 46.16 | 30.69 | 16.64 | 11.67 | 12.61 |
| Break Energy (kJ/kg) | 136.49 | 87.02 | 80.87 | 80.54 | 86.86 |
| Surface Fractal | 5 | 2.02 | 1.94 | 1.76 | 1.91 |

The submicron unsintered fluoroapatite (Submicron Unsintered FHA) is a fluorine doped apatite that can be used as an osteoconductive additive and a flow aid. The flow results from the polydioxanone and submicron unsintered FHA blends indicate that the best concentration of additive for Selective Laser Sintering is 7wt%. (Table 6)

*Table 7 Flow behavior of pure polydioxanone powder and submicron Bioglass at 90°C.*

| Submicron Bioglass | 1wt% | 3wt% | 5wt% | 7wt% | 10wt% |
|---|---|---|---|---|---|
| Avalanche Energy (kJ/kg) | 59.26 | 70.69 | 54.67 | 46.26 | 54.11 |
| Break Energy (kJ/kg) | 146.21 | 151.33 | 135.48 | 127.18 | 126.06 |
| Surface Fractal | 6.63 | 6.69 | 5.84 | 5.38 | 4.7 |

The Submicron Bioglass does not indicate that it would be a good flow agent within 1-10 wt% loading, but it can be blended with other flow additives mentioned for a specialized blend for bone. Additionally, when surface fractal is graphed with additive concentration, a trendline equation indicates that a surface fractal of two could be achieved at 21.5wt% bioglass. This indicates that Bioglass can be utilized as a flow aid in higher concentrations. The Bioglass was obtained from Schott (Table 7).

*Table 8 Flow behavior of pure polydioxanone powder and submicron UTCP at 90°C.*

| Submicron UTCP | 1wt% | 3wt% | 5wt% | 7wt% | 10wt% |
|---|---|---|---|---|---|
| Avalanche Energy (kJ/kg) | 47.28 | 24.62 | 19.45 | 15.18 | 16.86 |
| Break Energy (kJ/kg) | 105.21 | 86.33 | 86.94 | 88.63 | 93.08 |
| Surface Fractal | 2.46 | 1.96 | 1.98 | 1.95 | 2.21 |
|  |  |  |  |  |  |

The submicron unsintered tricalcium phosphate (submicron UTCP) proved to be a good flow agent within a 1 - 10 wt% concentration, with concentrations between 3-7wt% being acceptable for Selective Laser Sintering. The submicron UTCP was acquired from Himed.

**Example 3**

**Making Composite Materials**

The composite powder has different mechanical properties depending on the additive used Table 9. The polydioxanone (RESOMER® X 206 S) powder blend with Bioglass containing silane as a surface treatment had the highest mechanical strength, the polydioxanone powder blend with Unsintered FHA had the highest modulus, and the polydioxanone powder blend with 10 micron UHA had the highest elongation at break Table 9. These results indicate that the additives chosen as a flow aid could also be used to induce a mechanical response in the final product manufactured from the powder composite blend. The tensile bars produced by injection molding has similar geometry to the shape ISO 20753 A14.

*Table 9 Mechanical characteristics of injection molded polydioxanone powder with multiple additives.*

| Material | Yield Strength (MPa) | Modulus (MPa) | Strain at Break (%) |
|---|---|---|---|
| X206S + 3wt% 10 micron UHA | 26.00 +/- 0.5 | 619.82 ± 18.23 | 288.91 ± 48.1 |
| X206S + 5wt% Unsintered FHA | 28.02 ± 0.559 | 769.00 ± 14.12 | 159.9 ± 36.14 |
| X206S + 5wt% BioGlass | 26.68 ± 1.23 | 604.35 ± 16.89 | 262.51 ± 6.56 |
| X206S + 5wt% BioGlass with Silane | 30.40 ± 6.53 | 641.87 ± 30.45 | 200.19 ± 36.26 |
| X206S + 5wt% Submicron UTCP | 28.84 ± 1.13 | 695.04 ± 40.65 | 246.92 ± 29.37 |

**Example 4**

**DSC, Annealing**

The crystallinity of the composite powder can be controlled by the operator either before or after printing. This process can be described as, but not limited to the term anneal, temper, toughen, indurate, and harden. For all annealing tests, the processing temperature of the composite PDO + 3wt% 10 micron UHA of 98°C was used. The cooling rate of the annealing method was controlled between 2.5°C to 10°C. The non-processed composite powder had a crystallinity of 57.6% while the processed powder had a crystallinity of 56.3%. The composite powder that was processed was allowed to cool in the Formiga P110 SLS machine overnight at a rate of less than 2°C/min from a processing temperature of 98°C. The polymer powder crystallinity observed at 2.5°C/min cooldown rate was 57.25% while the polymer powder crystallinity observed at 10°C/min cooldown had a crystallinity of 59.32%. The polymer powder crystallinity observed at 5°C/min was largest at 62.18%. The crystallinity data for annealing tests can be observed in Table 10.

In addition to the change in crystallinity, the annealing procedure affected the onset of melt for the polymer powder. Each material that had a controlled cooldown rate had an onset of melt of at least 98°C. The onset of melt was highest for material cooled at 2.5°C/min at 99.21°C, while the material cooled at both 5°C/min and 10°C/min had an onset of melt of 98.97°C. Furthermore, the material that was not processed and the material that was processed without a controlled cooldown had much lower onsets of melt at 92.16°C and 94.46°C respectively. This indicates that the annealing or controlled cooldown of material after processing can benefit the processing of PDO composite powder. Higher processing temperatures prevents curling or shifting of material during the printing process. This would result in a higher print job success rate.

*Table 10 Crystallinity of powder annealed at different cooling rates.*

| Powder | Crystallinity (%) | Melt Onset Temperature (°C) |
|---|---|---|
| Not Processed Powder | 57.60 | 92.16 |
| Processed Powder | 56.25 | 93.46 |
| 2.5°C/min. Cooldown | 57.27 | 99.21 |
| 5°C/min. Cooldown | 62.18 | 98.97 |
| 10°C/min Cooldown | 59.32 | 98.97 |

**Example 5**

**Method of Preparation for SLS Processing-Blending**

The polydioxanone composite powder blend is produced by mixing milled polydioxanone powder with different concentrations of multiple potential additives. The polydioxanone powder and additive were weighed out at room conditions utilizing a scale that is accurate to 1 milligram. The polydioxanone powder and additive were then placed in a Somakon MP-LB Labormischer Speedmix and mixed utilizing three iterations of 300 rpm for two minutes. The volume of the mixing container was 0.5 liter. Inversion mixing can also be utilized to blend the polydioxanone powder and additive, but this procedure takes a significantly longer amount of time.

**Example 6**

**Method of Preparation for SLS Processing-Mix Milling**

A mix milling procedure was developed by placing five grams of polymer particle and 0.26 grams of salt into a container with a 25 mm stainless steel ball. The container was shaken at a frequency of 30 Hz for three minutes. After this mix milling procedure was completed, the salt was embedded into the surface of the polymer particle at an even distribution. Additionally, no salt additive could be observed on the imaging platform indicating a homogenous powder blend was obtained.

**Example 7**

**Polymer Powder Flow Improvement with Water-Soluble Salt Flow Aids**

Three polymer powders were blended with water-soluble salts and their powder flow at elevated temperatures was evaluated. RESOMER® X 206 S (Polydioxanone), RESOMER® C 212 (Polycaprolactone), and RESOMER® L 207 S polymers were milled and sieved to where all material collected was less than 100μm in size. The three polymers were mix milled by adding 5 grams of polymer powder with 0.26 grams of salt additive for a five weight-percent concentration of salt to polymer powder. All materials were placed in a stainless-steel container with a 25 mm stainless steel ball and shaken at a frequency of 30 Hz for three minutes. The resulting base powders and powder blends were evaluated using a dynamic flow analysis technique to determine the water-soluble salt affect on powder flow. All base powders showed a benefit in powder flow after mix milling with a water-soluble salt.

Table 11 RESOMER® L 207 S flow properties with different water-soluble salts at 160°C.

|  | RESOMER® L 207 S | RESOMER® L 207 S + 5% KCl | RESOMER® L 207 S + 5% Na2SO4 | RESOMER® L 207 S + 5% NaCl | RESOMER® L 207 S + 5% MgSO4 |
|---|---|---|---|---|---|
| Break Energy (kJ/kg) | 61.58 | 47.19 | 48.12 | 34.54 | 55.88 |
| Avalanche Angle | 74.2 | 72.6 | 73.0 | 67.2 | 74.6 |
| Surface Fractal | 5.350 | 3.740 | 3.080 | 4.340 | 4.110 |

Table 12 RESOMER® C 212 flow properties with different water-soluble salts at 50°C.

|  | RESOMER® C 212 | RESOMER® C 212 + 5% KCl | RESOMER® C 212 + 5% Na2SO4 | RESOMER® C 212 + 5% NaCl | RESOMER® C 212 + 5% MgSO4 |
|---|---|---|---|---|---|
| Break Energy (kJ/kg) | 55.98 | 44.33 | 46.45 | 51.20 | 48.78 |
| Avalanche Angle | 106.2 | 82.4 | 93.2 | 86.1 | 86.1 |
| Surface Fractal | 7.010 | 4.440 | 6.160 | 4.740 | 4.660 |

Table 13 RESOMER® X 206 S flow properties with different water-soluble salts at 90°C.

|  | RESOMER® X 206 S | RESOMER® X 206 S + 5% KCl | RESOMER® X 206 S + 5% Na2SO4 | RESOMER® X 206 S + 5% NaCl | RESOMER® X206 S + 5% MgSO4 |
|---|---|---|---|---|---|
| Break Energy (kJ/kg) | 62.84 | 55.60 | 58.95 | 54.99 | 50.55 |
| Avalanche Angle | 84.6 | 76.0 | 73.7 | 66.8 | 63.5 |
| Surface Fractal | 6.12 | 2.65 | 3.14 | 2.60 | 2.47 |

**Example 8**

**Powder Flow Optimization with RESOMER® X 206 S**

The use of water-soluble salts to improve the flow of polymer powders is evaluated using multiple salt concentrations with RESOMER® X 206 S. Water-soluble salt concentrations of one, five, and ten weight percent with mix milled with polymer powder using the mix milling method identified within example 6. The use of different concentrations indicated that while each salt benefitted the flow of the polymer powders, the concentration used from each salt will vary depending on the flow properties desired.

*Table 14 RESOMER® L 207 S flow properties with different water-soluble salts at 160°C.*

|  | RESOMER® X 206 S | RESOMER® X 206 S + 1% MgSO4 | RESOMER® X 206 S + 1% KCl | RESOMER® X 206 S + 1% Na2SO4 | RESOMER® X 206 S + 1% NaCl |
|---|---|---|---|---|---|
| Break Energy (kJ/kg) | 62.84 | 62.7 | 53.62 | 86.64 | 61.15 |
| Avalanche Angle | 84.6 | 70.7 | 69.6 | 88.6 | 73.5 |
| Surface Fractal | 6.12 | 3.15 | 2.28 | 3.39 | 3.23 |

*Table 15 RESOMER® C 212 flow properties with different water-soluble salts at 50°C.*

|  | RESOMER® X 206 S | RESOMER® X 206 S + 5% MgSO4 | RESOMER® X 206 S + 5% KCl | RESOMER® X 206 S + 5% Na2SO4 | RESOMER® X206 S + 5% NaCl |
|---|---|---|---|---|---|
| Break Energy (kJ/kg) | 62.84 | 50.55 | 55.60 | 58.95 | 54.99 |
| Avalanche Angle | 84.6 | 63.5 | 76.0 | 73.7 | 66.8 |
| Surface Fractal | 6.12 | 2.47 | 2.65 | 3.14 | 2.60 |

*Table 16 RESOMER® X 206 S flow properties with different water-soluble salts at 90°C.*

|  | RESOMER® X 206 S | RESOMER® X 206 S + 10% MgSO4 | RESOMER® X 206 S + 10% KCl | RESOMER® X 206 S + 10% Na2SO4 | RESOMER® X206 S + 10% NaCl |
|---|---|---|---|---|---|
| Break Energy (kJ/kg) | 62.84 | 53.82 | 56.51 | 57.11 | 55.74 |
| Avalanche Angle | 84.6 | 65.8 | 70.8 | 67.7 | 69.2 |
| Surface Fractal | 6.12 | 2.71 | 2.32 | 2.76 | 2.53 |

**Example 9**

**Processing Method**

The disclosed composite powder processing procedure can be optimized to obtain desired printed article crystallinity. The flow of the PDO composite powder with 3wt% 10 micron unsintered calcium phosphate was sufficient for the printing process until 105°C was reached in the printing chamber. As a result, the printing chamber temperature range suggested is 95°C to 100°C, more preferably 98°C +/- 1.5°C. All materials were heated in the Formiga P110 SLS machine for a minimum of one hour after reached 98°C to ensure the material temperature is 98°C; furthermore, the layer height (L) for the printing process was set to 100 microns (0.1 mm). The printing parameters altered for each print setting were Laser Wattage (W), Scanning Speed (S), and Hatch Distance (D). The printing parameters and the layer height were utilized to determine an energy density of the print. The formula for Energy Density used can be seen in Equation 1.

*Equation 1 Energy Density Equation*

$$Energy\ Density = \frac{W}{(S * D * L)}\ \left(\frac{J}{mm^3}\right)$$

Before the parts were printed, a base support with dimensions 300 x 75 x 0.3 mm was printed using a 0.15 J/mm$^3$ energy density. The tensile bars that were printed on the second base support. After the third layer of the base support, only the cross sections corresponding to the tensile bar geometries were irradiated by the laser. The tensile bars were printed at a range of different energy densities.

As the printing energy density is increased, the resulting printed article crystallinity increases. All printed articles defined as 'Not Annealed' were removed from the printing chamber immediately after the end of the print job. Printed articles that were not annealed saw an increase in crystallinity from 41.71% at 0.15 J/mm3 to 47.31% at 0.3 J/mm3. Additionally, the 0.25 J/mm3 energy density crystallinity increased to 48.14% after annealing by allowing the printed article to cool in the Formiga P110 SLS machine at a rate less than 2°C/min. As a result, the energy density of the printing parameters used can be set to allow for a designed crystallinity within the 3D printed article. For example, a part can be printed with multiple different energy densities in order to meet the desired mechanical requirements for use.

*Table 17 Crystallinity of printed parts produced at different energy densities from polydioxanone + 3wt% 10 micron UHA.*

|  | First Cycle Crystallinity (%) | Second Cycle Crystallinity (%) |
|---|---|---|
| 0.15 J/mm$^2$ Not Annealed | 41.71 | 38.89 |
| 0.2 J/mm$^2$ Not Annealed | 43.18 | 39.55 |
| 0.25 J/mm$^2$ Not Annealed | 44.05 | 39.01 |
| 0.3 J/mm$^2$ Not Annealed | 47.31 | 43.66 |
| 0.25 J/mm$^2$ Annealed | 48.14 | 39.55 |

**Example 10**

**Use of Base Support Processing Other Bioresorbable Polymers**

In addition to the polydioxanone material that was printed on the 300 x 75 x 0.3 mm base, additional materials required the use of a base support to enable the successful printing of parts. The materials that benefitted from the base support are Polycaprolactone, Polylactic Acid (Poly L,Lactide), and Poly (lactic-co-glycolic) acid. The polycaprolactone and polylactide materials would curl and shrink without the use of the base support. Any curling and shrinking observed was significant to where the blade would engage and shift the printed articles during recoating of a new powder layer. The poly (lactic-co-glycolic) acid material benefitted from the base as the material is very brittle and can break during recoating when thin. Without the use of the base anchoring layer, parts could not successfully be printed to completion.

**Example 11**

**Mechanical Results After Processing**

The compositions can have controlled mechanical characteristics dependent on the processing method. For example, when processing the polydioxanone+3wt% 10 micrometer unsintered calcium phosphate composite powder in a selective laser sintering machine, the mechanical characteristics of the printed articles is highly dependent on the laser energy density and the part removal process. The effect of printing process on mechanical characteristics was evaluated using a small tensile bar geometry. The energy density of the printing parameters used for both sets of mechanical samples is 0.25 J/mm$^3$.

If a printed article of polydioxanone and 3wt% calcium phosphate is removed immediately after the printing operation has completed, the tensile strength at yield of 20.65 +/- 0.85 MPa, a Modulus of 551 +/- 11.5, and elongation at break 79.39 +/- 40.64%; however, if the printed article is allowed to slowly cool within the system, the tensile at yield of 32 +/- 0.47 MPa, a Modulus of 827 +/- 25.8 MPa, and elongation at break of 9.36 +/- 0.90 %. Additionally, the mechanical testing samples that were allowed to cool in process had a crystallinity of 48.14% while the mechanical testing samples that were removed immediately after processing had a crystallinity of 44.05%. The mechanical testing samples were printed at 98°C +/- 1.5°C on a base support structure within the print bed. The Formiga P100 SLS machine used for this process required four hours to cool to room temperature of 25°C. The resulting data indicates that articles printed from polydioxanone +3% unsintered calcium phosphate can have a designed engineering stress if the cooling rate is controlled in process.

Additionally, parts have increasing mechanical strength with an increasing energy density setting. Parts produced with a higher energy density has a higher tensile strength at break and a more consistent elongation at break compared to parts produced at a lower energy density (Table 18). Multiple energy densities can be used within a print if desired. Through this, portions of the 3D article being printed can have specially printed internal structures at higher energy density to meet mechanical loading directions. As an example, this could result in a highly personally optimized medical implant design. A personalized medical implant could be printed with multiple energy densities, in a direction of mechanical loading on the final 3D article, so that it is optimized for both tensile strength and modulus.

*Table 18 Mechanical performance of polydioxanone + 3wt% 10 micron UHA with different printing energy densities.*

|  | Tensile Strength at Yield (MPa) | Modulus (MPa) | Elongation at Break (%) |
|---|---|---|---|
| 0.15 J/mm$^2$ Not Annealed | 11.2 +/- 0.69 | 379 +/- 14.4 | 7.93 +/- 1.01 |
| 0.2 J/mm$^2$ Not Annealed | 17.4 +/- 0.63 | 551 +/- 21.0 | 16.4 +/- 3.81 |
| 0.25 J/mm$^2$ Not Annealed | 20.65 +/- 0.85 | 551 +/- 11.5 | 79.4 +/- 40.6 |
| 0.25 J/mm$^2$ Annealed | 32 +/- 0.47 | 827 +/- 25.8 | 9.36 +/- 0.90 |
| 0.3 J/mm$^2$ Not Annealed | 21.3 +/- 0.45 | 559 +/- 13.5 | 179 +/- 5.53 |

**Example 12**

**Water-Soluble Salt Influence on Material Mechanical Properties**

The influence of water-soluble salts on the final mechanical properties of a produced article from the polymer powder composite is evaluated by injection molding different compositions and testing the produced tensile bars. Tables 19 - 22 show the mechanical results for varying weight percentages of water soluble salts within polydioxanone. All composite powder blends indicate an increase in modulus with increasing weight percentage of water-soluble salt. Magnesium sulfate also increases the elongation at break of the polymer composite with increasing weight percentage of the water soluble salt. Additionally, both the potassium chloride and sodium chloride salts had a large influence on the elongation at break of the powder composite. All water-soluble salts did not significantly decrease or increase the powder composite tensile strength at yield. This indicates that each water-soluble salt has a specific effect on material mechanical properties. The combination of multiple salts in varying concentrations for designed mechanical properties would be possible.

*Table 19 Mechanical properties of Polydioxanone with varying weight percentages of magnesium sulfate.*

|  | Tensile Strength at Yield (MPa) | Modulus (MPa) | Elongation at Break (%) |
|---|---|---|---|
| Polydioxane, No Additive | 35.82 +/- 3.17 | 784.53 +/- 26.92 | 164.89 +/- 40.71 |
| 1wt% MgSO$_4$ | 35.29 +/- 6.51 | 765.96 +/- 26.05 | 168.03 +/- 48.18 |
| 5wt% MgSO$_4$ | 35.45 +/- 5.03 | 835.39 +/- 28.78 | 185.61 +/- 50.98 |
| 10wt% MgSO$_4$ | 36.36 +/- 4.82 | 930.96 +/- 37.21 | 197.79 +/- 39.94 |

*Table 20 Mechanical properties of Polydioxanone with varying weight percentages of potassium chloride.*

|  | Tensile Strength at Yield (MPa) | Modulus (MPa) | Elongation at Break (%) |
|---|---|---|---|
| Polydioxane, No Additive | 35.82 +/- 3.17 | 784.53 +/- 26.92 | 164.89 +/- 40.71 |
| 1wt% KCl | 39.33 +/- 8.49 | 651.99 +/- 18.37 | 327.18 +/- 30.06 |
| 5wt% KCl | 37.27 +/- 5.25 | 889.07 +/- 46.61 | 137.75 +/- 64.77 |
| 10wt% KCl | 38.20 +/- 6.35 | 951.98 +/- 50.79 | 165.83 +/- 90.20 |

*Table 21 Mechanical properties of Polydioxanone with varying weight percentages of sodium sulfate.*

|  | Tensile Strength at Yield (MPa) | Modulus (MPa) | Elongation at Break (%) |
|---|---|---|---|
| Polydioxane, No Additive | 35.82 +/- 3.17 | 784.53 +/- 26.92 | 164.89 +/- 40.71 |
| 1wt% Na$_2$SO$_4$ | 35.27 +/- 4.00 | 726.36 +/- 101.02 | 180.99 +/- 67.01 |
| 5wt% Na$_2$SO$_4$ | 34.31 +/- 1.61 | 815.35 +/- 35.35 | 159.78 +/- 33.77 |
| 10wt% Na$_2$SO$_4$ | 35.69 +/- 2.32 | 954.39 +/- 29.21 | 128.41 +/- 19.72 |

*Table 22 Mechanical properties of Polydioxanone with varying weight percentages of sodium chloride.*

|  | Tensile Strength at Yield (MPa) | Modulus (MPa) | Elongation at Break (%) |
|---|---|---|---|
| Polydioxane, No Additive | 35.82 +/- 3.17 | 784.53 +/- 26.92 | 164.89 +/- 40.71 |
| 1wt% NaCl | 38.85 +/- 7.69 | 766.45 +/- 43.01 | 220.58 +/- 15.19 |
| 5wt% NaCl | 34.22 +/- 4.42 | 828.42 +/- 25.41 | 255.35 +/- 25.49 |
| 10wt% NaCl | 38.52 +/- 5.25 | 1027.29 +/- 34.37 | 206.29 +/- 11.58 |

**Claims**

1. A composite powder material, preferably with optimized flow properties for powder processing technologies, comprising a polymer powder, which comprises polydioxanone and a water-soluble salt.

2. The material of claim 1, wherein the water-soluble salt is embedded into the particle surface of polymeric powder, wherein embedment is obtained through methods of chemical, thermal, or physical integration methods.

3. The material of claim 1, wherein the water-soluble salt is embedded into the particle surface of the polymeric powder by mixing or milling.

4. The material according to any of claims 1 to 3, wherein the polymer powder comprises a processed polymer powder or a non-processed polymer powder, wherein processing is selected from selective laser sintering, binder jetting, selective absorbing sintering, and hybrid methods of the same.

5. The material according to any of claims 1 to 4, wherein the polymer powder is a blended mixture of virgin polymer powder and processed polymer powder; and wherein the processed polymer powder was annealed during laser sintering processing.

6. The material according to any of claims 1 to 5, wherein the water-soluble salt is magnesium sulfate, sodium sulfate, potassium chloride, sodium chloride, sodium sulfate, aluminum potassium sulfate, magnesium chloride, or magnesium chloride hexahydrate or a mixture thereof.

7. The material according to any of claims 1 to 6. wherein the water-soluble salt comprises not more than about 50wt%, preferably between 0.01wt% to 30 wt%, more preferably between 0.01wt% to 20wt% of the composite powder material.

8. The material according to any of claims 1 to 7, wherein the polymer powder comprises not more than about 99wt%, preferably between 70wt% to 95wt% or 80wt% to 99wt% of the composite powder material.

9. A method of producing a 3D article comprising the steps:

(a) applying and irradiating a base anchoring layer of polymer of similar base geometry as the 3D article being produced;
(b) applying a layer of the composite powder material of any of claims 1 to 8 to a printing area;
(c) sintering the cross-sectional area of the 3D article being produced;
(d) applying multiple layers of the composite powder material to the printing area on top of the base anchoring layer until a full 3D article has been printed;
(e) annealing the composite powder material one second to 8 hours at a temperature of from preferably 8°C to 60°C, more preferably 9°C to 50°C, and most preferably 10°C to 5°C below initial polymer melting temperature; and
(f) cooling the composite powder material at a controlled cooling rate of preferably 0.1°C/min to 35°C/min, more preferably 1°C/min to 20°C/min, and most preferably 2°C/min to 5°C/min.

10. The method of claim 9, wherein the irradiated base anchoring layer is further supported by a base support below; or, wherein a base support is added to any structure other than the base geometry.

11. The method of claim 10, wherein the base support is irradiated with a different energy density from the 3D article being produced by laser sintering.

12. The method of claim 10 or claim 11, wherein the base support can be removed from the 3D article being produced; and wherein the base geometry can be separated into its initial powder form through sieving.

13. The method according to any of claims 9 to 12, wherein engineering stresses can be embedded into the 3D article being produced by altering the energy density of the laser sintering process between 0.01 J/mm$^3$ to 5.0 J/mm$^3$.


**Patentansprüche**

1. Pulver-Verbundmaterial, vorzugsweise mit optimierten Fließeigenschaften, für Pulververarbeitungsverfahren, umfassend ein Polymerpulver, das Polydioxanon und ein wasserlösliches Salz umfasst.

2. Material gemäß Anspruch 1, wobei das wasserlösliche Salz in die Partikeloberfläche des Polymerpulvers eingebettet ist, wobei Einbettung durch chemische, thermische oder physikalische Integrationsverfahren erhalten ist.

3. Material gemäß Anspruch 1, wobei das wasserlösliche Salz durch Mischen oder Mahlen in die Partikeloberfläche des Polymerpulvers eingebettet ist.

4. Material gemäß einem der Ansprüche 1 bis 3, wobei das Polymerpulver ein verarbeitetes Polymerpulver oder ein nichtverarbeitetes Polymerpulver umfasst, wobei Verarbeitung ausgewählt ist aus selektivem Lasersintern, Binder-Jetting, selektivem Absorptionssintern und hybriden Verfahren davon.

5. Material gemäß einem der Ansprüche 1 bis 4, wobei das Polymerpulver ein gemischtes Gemisch von unberührtem Polymerpulver und verarbeitetem Polymerpulver ist; und wobei das verarbeitete Polymerpulver während Lasersinterverarbeitung wärmebehandelt worden ist.

6. Material gemäß einem der Ansprüche 1 bis 5, wobei das wasserlösliche Salz Magnesiumsulfat, Natriumsulfat, Kaliumchlorid, Natriumchlorid, Natriumsulfat, Aluminiumkaliumsulfat, Magnesiumchlorid oder Magnesiumchloridhexahydrat oder ein Gemisch davon ist.

7. Material gemäß einem der Ansprüche 1 bis 6, wobei das wasserlösliche Salz nicht mehr als etwa 50 Gew.-%, vorzugsweise zwischen 0,01 Gew.-% und 30 Gew.-%, bevorzugter zwischen 0,01 Gew.-% und 20 Gew.-%, des Pulver-Verbundmaterials umfasst.

8. Material gemäß einem der Ansprüche 1 bis 7, wobei das Polymerpulver nicht mehr als etwa 99 Gew.-%, vorzugsweise zwischen 70 Gew.-% und 95 Gew.-% oder 80 Gew.-% und 99 Gew.-%, des Pulver-Verbundmaterials umfasst.

9. Verfahren zur Herstellung eines 3D-Gegenstands, umfassend die Schritte:

(a) Aufbringen und Bestrahlen einer Basis-Verankerungsschicht aus Polymer mit einer ähnlichen Basisgeometrie wie der hergestellte 3D-Gegenstand;
(b) Aufbringen einer Schicht des Pulver-Verbundmaterials gemäß einem der Ansprüche 1 bis 8 auf einen Druckbereich;
(c) Sintern des Querschnitts des hergestellten 3D-Gegenstands;
(d) Aufbringen mehrerer Schichten des Pulver-Verbundmaterials auf den Druckbereich auf die Basis-Verankerungsschicht, bis ein fertiger 3D-Gegenstand gedruckt worden ist;
(e) Wärmebehandeln des Pulver-Verbundmaterials für eine Sekunde bis 8 Stunden bei einer Temperatur von vorzugsweise 8 °C bis 60 °C, bevorzugter 9 °C bis 50 °C und höchst bevorzugt 10 °C bis 35 °C, unter der Anfangs-Polymerschmelztemperatur; und
(f) Kühlen des Pulver-Verbundmaterials mit einer gesteuerten Kühlrate von vorzugsweise 0,1 °C/min bis 35 °C/min, bevorzugter 1 °C/min bis 20 °C/min und höchst bevorzugt 2 °C/min bis 5 °C/min.

10. Verfahren gemäß Anspruch 9, wobei die bestrahlte Basis-Verankerungsschicht ferner von einem darunter liegenden Basisträger getragen wird; oder wobei zu einer beliebigen Struktur ein von der Basisgeometrie verschiedener Basisträger hinzugefügt wird.

11. Verfahren gemäß Anspruch 10, wobei der Basisträger mit einer anderen Energiedichte als der durch Lasersintern hergestellte 3D-Gegenstand bestrahlt wird.

12. Verfahren gemäß Anspruch 10 oder Anspruch 11, wobei der Basisträger von dem hergestellten 3D-Gegenstand entfernt werden kann; und wobei die Basisgeometrie durch Sieben in ihre Ausgangspulverform getrennt werden kann.

13. Verfahren gemäß einem der Ansprüche 9 bis 12, wobei technische Spannungen durch Verändern der Energiedichte des Lasersinterverfahrens zwischen 0,01 J/mm$^3$ und 5,0 J/mm$^3$ in den hergestellten 3D-Gegenstand eingebettet werden können.

**Revendications**

1. Matériau en poudre composite, préférablement comportant des propriétés d'écoulement optimisées pour des technologies de traitement de poudre, comprenant une poudre de polymère, qui comprend une polydioxanone et un sel soluble dans l'eau.

2. Matériau selon la revendication 1, le sel soluble dans l'eau étant incorporé dans la surface de particule de poudre polymérique, l'incorporation étant obtenue par des procédés parmi des procédés d'intégration chimique, thermique ou physique.

3. Matériau selon la revendication 1, le sel soluble dans l'eau étant incorporé dans la surface de particule de la poudre polymérique par mélange ou broyage.

**4.** Matériau selon l'une quelconque des revendications 1 à 3, la poudre de polymère comprenant une poudre de polymère traitée ou une poudre de polymère non traitée, le traitement étant choisi parmi un frittage laser sélectif, une projection de liant, un frittage par absorption sélective et des procédés hybrides de ceux-ci .

**5.** Matériau selon l'une quelconque des revendications 1 à 4, la poudre de polymère étant un mélange mélangé de poudre de polymère vierge et de poudre de polymère traitée ; et la poudre de polymère traitée ayant été recuite pendant un traitement par frittage laser.

**6.** Matériau selon l'une quelconque des revendications 1 à 5, le sens soluble dans l'eau étant le sulfate de magnésium, le sulfate de sodium, le chlorure de potassium, le chlorure de sodium, le sulfate de sodium, le sulfate d'aluminium et de potassium, le chlorure de magnésium ou l'hexahydrate de chlorure de magnésium ou un mélange correspondant.

**7.** Matériau selon l'une quelconque des revendications 1 à 6, le sel soluble dans l'eau ne comprenant pas plus d'environ 50 % en poids, préférablement entre 0,01 % en poids et 30 % en poids, plus préférablement entre 0,01 % en poids et 20 % en poids du matériau en poudre composite.

**8.** Matériau selon l'une quelconque des revendications 1 à 7, la poudre de polymère ne comprenant pas plus d'environ 99 % en poids, préférablement entre 70 % en poids et 95 % en poids ou 80 % en poids à 99 % en poids du matériau en poudre composite.

**9.** Procédé de production d'un article 3D comprenant les étapes :

(a) application et irradiation d'une couche d'ancrage de base de polymère de géométrie de base similaire à l'article 3D qui est produit ;
(b) application d'une couche du matériau en poudre composite selon l'une quelconque des revendications 1 à 8 sur une surface d'impression ;
(c) frittage de la surface de section transversale de l'article 3D qui est produit ;
(d) application de plusieurs couches du matériau en poudre composite sur la surface d'impression au-dessus de la couche d'ancrage de base jusqu'à ce qu'un article 3D entier a été imprimé ;
(e) recuisson du matériau en poudre composite une seconde à 8 heures à une température de préférablement 8 °C à 60 °C, plus préférablement 9 °C à 50 °C, et le plus préférablement 10 °C à 35 °C en dessous de la température de fusion de polymère initial ; et
(f) refroidissement du matériau en poudre composite à une vitesse de refroidissement régulée de préférablement 0,1 °C/min à 35 °C/min, plus préférablement 1 °C/min à 20 °C/min et le plus préférablement 2 °C/min à 5 °C/min.

**10.** Procédé selon la revendication 9, la couche d'ancrage de base irradiée étant en outre supportée par un support de base en dessous ; ou un support de base étant ajouté à une quelconque structure autre que la géométrie de base.

**11.** Procédé selon la revendication 10, le support de base étant irradié avec une densité d'énergie différente de l'article 3D qui est produit par frittage laser.

**12.** Procédé selon la revendication 10 ou la revendication 11, le support de base pouvant être éliminé de l'article 3D qui est produit ; et la géométrie de base pouvant être séparée en sa forme de poudre initiale par le biais d'un tamisage.

**13.** Procédé selon l'une quelconque des revendications 9 à 12, des contraintes techniques pouvant être incorporées dans l'article 3D qui est produit en modifiant la densité d'énergie du processus de frittage laser entre 0,01 J/mm$^3$ et 5,0 J/mm$^3$.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019043137 A1

- JP 2007301945 A